# EUROPEAN PATENT SPECIFICATION

(11) **EP 3 342 133 B1**
(45) Date of publication and mention of the grant of the patent: **20.11.2019**
(21) Application number: 16707223.0
(22) Date of filing: 23.02.2016
(51) Int. Cl.: H04L 29/08, G06Q 10/00, G09F 27/00, H04W 4/02, G06Q 10/02, G06Q 10/10, G06Q 30/02, G06F 3/14, G06F 1/16, H04M 1/725, H04W 8/00, H04W 8/18, H04W 4/80, H04W 4/029

(54) **METHOD, DEVICES AND A SYSTEM FOR GATHERING INFORMATION FOR PROVIDING PERSONALISED AUGMENTED LOCATION INFORMATION**
VERFAHREN, VORRICHTUNG UND SYSTEM ZUM SAMMELN VON INFORMATION ZUR BEREITSTELLUNG VON PERSONLISIERTER ERWEITERTER ORTSINFORMATION
PROCEDEE, APPAREIL ET SYSTEME POUR RASSEMBLER INFORMATION POUR FOURNIR DE L'INFORMATION AUGENTEE PERSONALISEE

(30) Priority: 26.08.2015 US 201514835920
(43) Date of publication of application: 04.07.2018
(73) Proprietor: Sony Mobile Communications Inc., Minato-ku Tokyo 108-0075 (JP)
(72) Inventor: ÖSTERBERG, Mårten, 227 30 Lund (SE); KRETZ, Martin, SE-216 13 Limhamn (SE)
(74) Representative: Aera A/S
(86) International application number: PCT/IB2016/050957
(87) International publication number: WO 2017/033064

(56) References cited:
- EP-A2- 1 954 008
- US-A1- 2007 024 580
- US-A1- 2015 100 621

## Description

### Field of invention

The inventions relates to a method for gathering information for providing personalised augmented location information.

The invention also relates to a portable communication device being associated with a user.

The invention also relates to a display arrangement being at least semi-stationary and being adapted to display a first information representing an environment, or resources or portable communication devices associated with persons, in said environment, in which or close to which environment the display is located.

The invention also relates to a system for gathering information for providing personalised augmented location information, the system comprising a portable communication device and a display arrangement.

### Technical Background

Getting at-a-glance information has become easy with "Smart Watches" where a user can easy see a reminder when it is time for a meeting. But small displays also have their limits - they are not great a visualizing large graphics, e.g. maps.

EP 1954 008 A2 discloses an interactive information system including a point of sales terminal having a display for displaying information regarding transactions, products and a communication module so that the terminal can communicate with as many different mobile communication devices in as many different manners.

US 2007/0024580 discloses an interactive display facility with a display for presenting content so that it is observable by viewers in the vicinity and a streaming component for streaming interactive content associated with the presented content to a nearby user device. The interactive content is thereby presented to the user in addition to the content presented on the display.

### Summary of invention

It is an object of the invention to provide a method for gathering information for providing personalised augmented information. This object has been achieved by a method for gathering information for providing personalised augmented information, the method comprising
providing a display arrangement being at least semi-stationary and being adapted to display a first information,
providing a portable communication device which is associated with a user and which stores or has access to information concerning the user or the user's identified intentions,
wherein the display arrangement is adapted to detect presence of the portable communication device or vice versa,
wherein the display arrangement and the communication device are adapted to
establish a communications link,
to assess if a piece of information concerning the user or the user's identified intentions pertains to a specific piece of the first information,
and, if a piece of information concerning the user or the user's identified intentions pertains to a specific piece of the first information, display on said display arrangement said first information and a second information,
the second information comprising an identifier.

The method e.g. makes it possible to gather information for providing personalised augmented information in an example as given below. Imagine a display showing a list of top 10 marathon running results for a race. When a user which participated in the marathon walks past, that specific users results are also displayed on the display arrangement, e.g. at position 27, which would not ordinarily be there. This way the method is augmenting an ordinary list with personalized information based on information associated with the user. This information associated with the user may e.g be the phone number the user noted in the entry form for the marathon. By also displaying a second information comprising an identifier, such as the name, or the start number, or an avatar, it is possible to display this augmented information for more than one user at the time.

It is a further object of the invention to provide a method for gathering information for providing personalised augmented information specifically related to location information.

This object has been achieved by a method for gathering information for providing personalised augmented location information, the method comprising
providing a display arrangement being at least semi-stationary and being adapted to display a first information representing an environment, or resources or portable communication devices associated with persons, in said environment, in which or close to which environment the display is located,
providing a portable communication device which is associated with a user and which stores or has access to information concerning the user's identified intentions,
wherein the display arrangement is adapted to detect presence of the portable communication device or vice versa,
wherein the display arrangement and the communication device are adapted to
establish a communications link,
to assess if a piece of information concerning the user's identified intentions pertains to a specific location within the environment or a specific resource or a specific person,
and, if a piece of information concerning the user's identified intentions pertains to a specific location within the environment or a specific resource or a specific person, display on said display arrangement said first information and a second information,
the second information comprising an identifier associated with the specific location, resource or person.

With this method it is possible to provide personalised augmented location information on a large display. The display may e.g. be a large display e.g. located in the reception of a building or on respective floor in or in the vicinity of an elevator or stair case. The display is typically stationary or at least semi-stationary. It may be noted that the stationary refers in particular to its limited movement relative to the environment. The display may e.g. be positioned in a cruising ship and be adapted to display the environment formed of the corridors, cabins and shared locations and resources on-board the cruising ship. The display is in a sense movable together with the ship but it is stationary relative to the environment represented by the first information.

The portable communication device which is associated with a user and which stores or has access to information concerning the user's identified intentions. The identified intentions may e.g. be appointments in the calendar comprising information about the intended location and the intended participants. The identified intentions may be a reservation of a resource, such as a projector, or other shared resources. The shared resource may be a car in a car pool or a car from a car rental service. The identified intentions may be an entry into a list of tasks, such as "pick up the projector" or "talk to Mr X". The identified intentions may also be automatically created by monitoring of searches performed by the user via internet search providers or by monitoring visited web-pages or by monitoring bookmarked web-pages, or the like. The identified intentions may be related to information directly stored on the communication device or automatically created via actions performed using the communication device. Alternatively or as a complement thereto the identified intentions may be related to information stored on or created from actions performed on other user associated device to which the portable communication device has access. The access may be continuous or intermittent.

When the user carrying the portable communication device comes within a predetermined distance from the display arrangement which in a preferred embodiment is acting as a beacon, the communication device detects the presence of the display arrangement and a communications link is established.

By comparing data or pieces of information related to the an environment, or resources or portable communication devices associated with persons, in said environment with data or pieces of information concerning the user's identified intentions the communication device and/or display arrangement establish if a piece of information concerning the user's identified intentions pertains to a specific location within the environment or a specific resource or a specific person.

This may e.g. be the case when a specific meeting room, i.e. a location is specified as part of the environment and this meeting room is also specified as an intended meeting room for an appointment in the user's calendar. This comparison preferably also involves establishment if there is a time set for the appointment and a comparison with the actual time to determine if the actual time is within a predetermined range from the time set for the appointment.

An affirmative answer to the comparison may also be noted if a communication device associated with another user which is also an intended participant for the same meeting is within the environment.

An affirmative answer to the comparison may also be noted if a communication device associated with another person who is identified in the task list or otherwise identified is identified as being within the environment.

An affirmative answer to the comparison may also be noted if a resource identified in a task list or appointment is identified as being within the environment.

If a piece of information concerning the user's identified intentions pertains to a specific location within the environment or a specific resource or a specific person, the display arrangement is adapted to apart from said first information also display a second information comprising an identifier associated with the specific location, resource or person.

The display may e.g. display a map showing the environment and display the meeting room in a different colour and provide a label indicating the name of the meeting room. Thereby the display normally displaying a map displays personalised augmented location information.

Preferred embodiments appear in the dependent claims and in the description. It may be noted that due to formal reasons the dependent claims refer to the first independent claim but it is contemplated that any preferred embodiment disclosed in a dependent claim may be combined with any other preferred embodiment disclosed in any other dependent claims unless directly contradictory.

The second information may further comprise an identifier associated with the user being displayed in association with the displaying of the specific location, resource or person. The identifier associated with the user may e.g. be a so-called avatar, a picture or any other kind of information recognisable by the user as information being associated with him/her.

By using an identifier associated with the user, it is possible for the display arrangement to display personalised augmented location information for more than one user at the same time. It may e.g. display the identifier of a first user in the representation of the meeting room where the first user has an appointment and display the identifier of a second user in the representation where a resource booked by the second user is located.

The display arrangement may have a communications beacon broadcasting its identifier. A beacon functionality draws energy and since the display arrangement typically is connected to mains it is preferred that the beacon is provided at the display arrangement side of the system. The beacon may be a Bluetooth beacon, and is preferably a Bluetooth low energy beacon. Alternatively the detection of the communication device being in the vicinity of a display, the communication device could find its position using other ways of positioning (such as via multiple Bluetooth low energy beacons) and with the resulting location coordinates, look up if any display is nearby. A server, or the device itself, could have a list of displays with coordinates to look at. RFID reader and tags may be used as an alternative to the beacons. One advantage with RFID is that the tag can be used passively.

The display arrangement may be adapted to display a routing from a present location of the display arrangement or the communication device to the specific location, resource or person.

In accordance with the method it may also be detected when the communication device has been removed from the display arrangement a predetermined distance and in response thereto terminating the displaying of the second information. Thereby the personalised augmented location information is not shown any longer when the user moves away from the display arrangement. As an alternative or complement thereto it may be possible to terminate the displaying of the second information after a specific time frame.

The system may also provide different levels of privacy. Some identified intensions may be set to never appear on the display arrangement. Others may be set to appear if no-one else is detected as being nearby. Others may be set to always appear independently on the presence of others or not. Other kinds of privacy settings may also be used.

It is a further object of the invention to provide a portable communication device being set-up for gathering information for providing personalised augmented location information.

This object has been achieved by a portable communication device being associated with a user,
wherein the device stores or has access to information concerning the user's identified intentions,
wherein the device is adapted to detect presence of a display arrangement or vice versa,
wherein the communication device is adapted to establish a communications link with the display arrangement and together with the display arrangement assess if a piece of information concerning the user's identified intentions pertains to a specific location within the environment or a specific resource or a specific person.

The advantages and function thereof has been discussed above in relation to the method.

The portable communication device may, if a piece of information concerning the user's identified intentions pertains to a specific location within the environment or a specific resource or a specific person, send to said display arrangement a second information, wherein the second information comprising an identifier associated with the user.

It is a further object of the invention to provide a display arrangement being set-up for gathering information for providing personalised augmented location information.

This object has been achieved by a display arrangement being at least semi-stationary and being adapted to display a first information representing an environment, or resources or portable communication devices associated with persons, in said environment, in which or close to which environment the display is located,
wherein the display arrangement is adapted to detect presence of a portable communication device or vice versa, wherein the communication device is associated with a user and stores or has access to information concerning the user's identified intentions
wherein the display arrangement is adapted to establish a communications link with the communication device,
and together with the communication device to assess if a piece of information concerning the user's identified intentions pertains to a specific location within the environment or a specific resource or a specific person,
and, if a piece of information concerning the user's identified intentions pertains to a specific location within the environment or a specific resource or a specific person, display on said display arrangement said first information and a second information,
the second information comprising an identifier associated with the specific location, resource or person.

The advantages and function thereof has been discussed above in relation to the method.

The display arrangement may adapted to receive from the communication device a further piece of the second information comprising an identifier associated with the user and displaying it in association with the displaying of the specific location, resource or person.

The display arrangement has preferably a communications beacon broadcasting its identifier.

The beacon is preferably a Bluetooth beacon, and more preferably a Bluetooth low energy beacon.

The display arrangement may be adapted to display a routing from a present location of the display arrangement or the communication device to the specific location, resource or person.

The display arrangement may be adapted to detect when the communication device has been removed from the display arrangement a predetermined distance and in response thereto terminating the displaying of the second information.

It is a further object of the invention to provide a system being set-up for gathering information for providing personalised augmented location information.

This object has been achieved by a system for gathering information for providing personalised augmented location information, the system comprising a portable communication device in accordance with any embodiment discussed above and a display arrangement in accordance with any embodiment discussed above.

### Brief description of the drawings

The invention will by way of example be described in more detail with reference to the appended schematic drawings, which shows a presently preferred embodiment of the invention.
Fig 1 schematically discloses a floor plan.
Fig 2-3 schematically discloses a display.
Fig 4 schematically discloses a system.
Fig 5 schematically illustrates the method.

### Detailed description of preferred embodiments

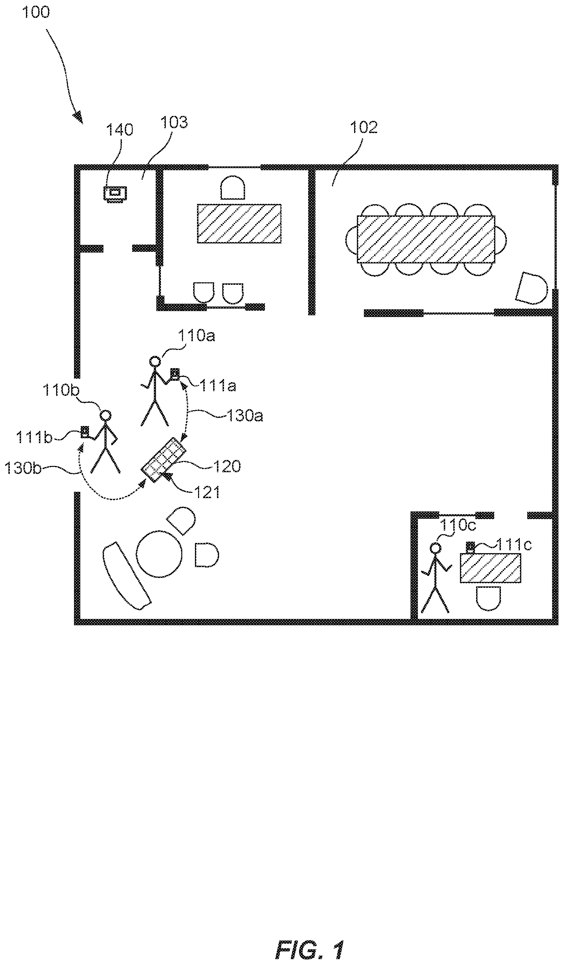

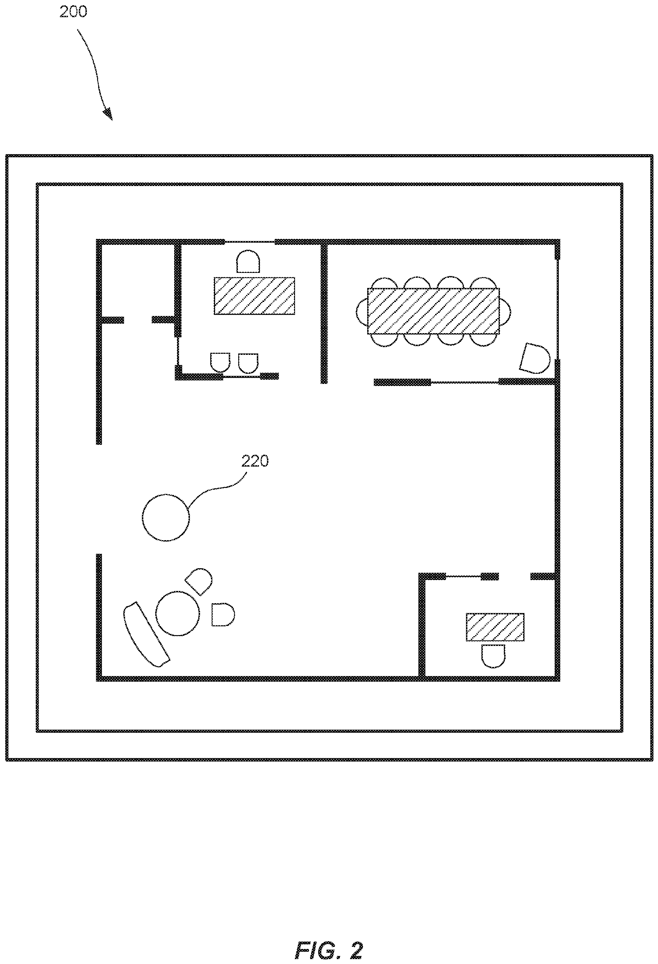

Fig 1 discloses a floor plan 100 in which a display arrangement 120 is located. In figs 2-3 the screen 200 of the display arrangement 120 is shown. Fig 1 depicts the real life and figs 2-3 depict the representation displayed on the display arrangement 120. Reference numerals of objects present in real life has been given reference numerals 1xx and their representation in on the display has been given reference numerals 2xx where applicable.

As shown in fig 2, the display arrangement 120 is arranged to normally display a representation of the floor plan 100 and to indicate with a dot 220 or any other suitable shape the location of the display arrangement 120 in the representation 200 of the floor plan 100.

When a first user 110a carrying a portable communication device 111a comes within a predetermined distance d from the display arrangement 120, the communication device 111a detects the presence of the display arrangement 120 and a first communications link 130a between the first communication device 111a and the display arrangement 120 is established.

The display arrangement 120 stores information or has access to information concerning the names and locations of different meeting rooms or other shared resources. By comparing data or pieces of information related to e.g. the names of meeting rooms in the environment, with data or pieces of information concerning the user's appointments (meeting in a room with a given name), the communication device 111 and/or display arrangement 120 establish if a piece of information concerning the user's appointment pertains to a meeting room within the environment.

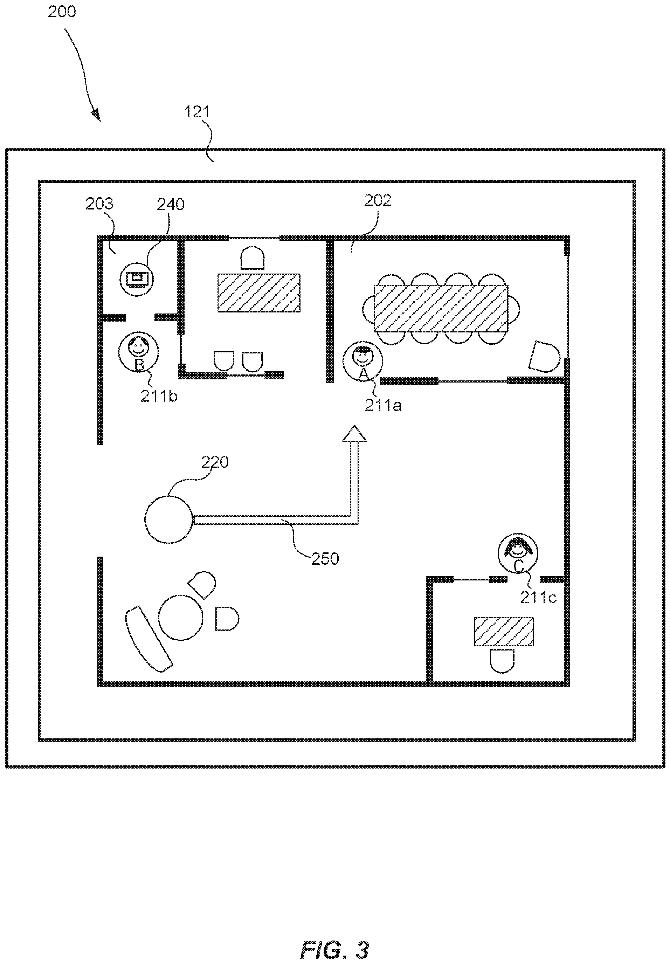

If it has been established that the environment 100 contains a meeting room 102 in which the user 10a is scheduled to attend a meeting, the representation 202 of meeting room 102 is highlighted by associating a second information 211a on the display 121 as shown in fig 3. The second information 211a may e.g. be an avatar associated with the first user 111a. The second information 211a is overlaid or shown in association with the representation 202 of the meeting room 102 on the display 121.

An affirmative answer to the comparison may also be noted if a communication device 111c associated with another user 110c which is also an intended participant for the same meeting is within the environment 100.

On the representation 200 this other user 110c may be indicated as an avatar 211c in a location associated with the location of the communication device 111c. A similar representation may be used if an affirmative answer to the comparison is reached if a communication device associated with another person who is identified in the task list or otherwise identified is identified as being within the environment.

An affirmative answer to the comparison may also be noted if a resource 140, such as a projector or the like, is identified in a task list or appointment is identified as being within the environment 100. In the representation 200 the location of the resource 140 is represented e.g. by a picture 240 of the resource 140 in the representation 203 of the actual location 103 of the resource 140. If more than user uses the display arrangement simultaneously it may be useful to display information identifying which user is intended to retrieve which resource. In the example of fig 3, the user 111b has booked the resource 140 and the display arrangement 120 displays in the representation 200 an avatar 211b in association with the representation 240 of the resource 140. In general terms these avatars or pictures of the users or resources may be said to be second information comprising an identifier associated with the specific location, resource or person.

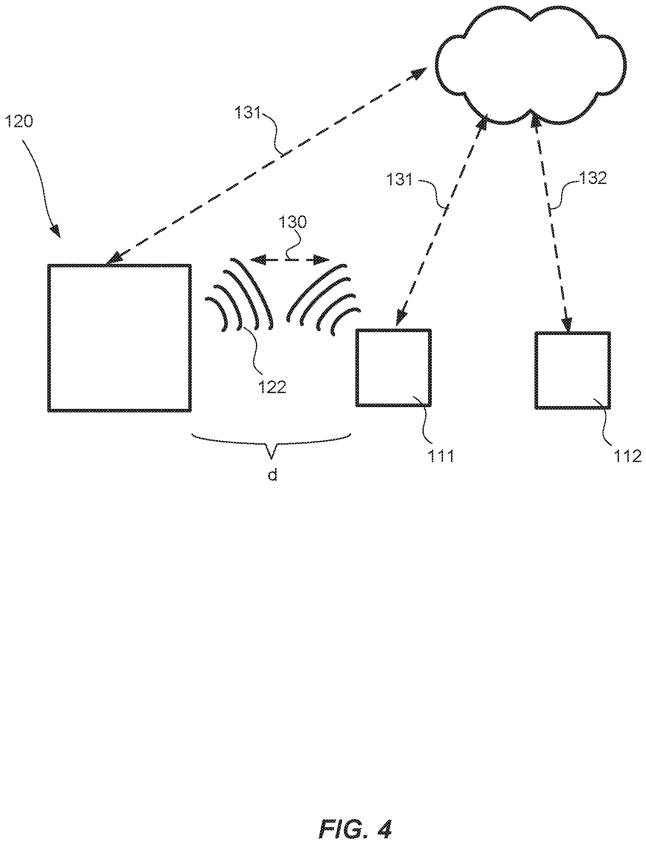

As briefly indicated in fig 4, the display arrangement 120 has a communications beacon 122 broadcasting its identifier. The beacon is a Bluetooth beacon, preferably a Bluetooth low energy beacon.

As shown in fig 3, the display arrangement is adapted to display a routing 250 from a present location of the display arrangement or the communication device to the specific location, resource or person. This may be useful in large or complex sites. The communications link 130 may be directly from device to device as indicated by line 130 in fig 3 or via a cloud service as indicated by lines 131 in fig 3. When using a cloud service communications link 13, information may also be retrieved from a further unit 112 also in communicating with the cloud service via another communications link 132

It is detected, preferably by the display arrangement 120, when the communication device 111 has been removed from the display arrangement a predetermined distance and in response thereto the displaying of the second information associated with that communication device 111 is terminated.

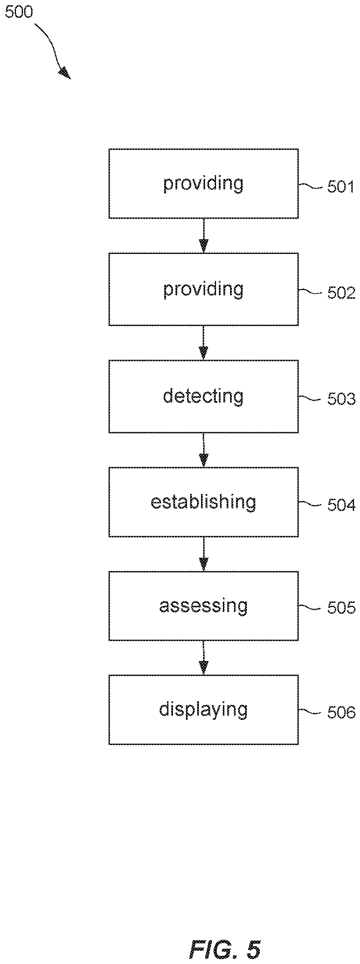

Fig 5 briefly shows the steps of the method 500;
providing 501 a display arrangement 120,
providing 502 a portable communication device 111,
detecting 503 presence of the portable communication device 111 in the vicinity of the display arrangement 120,
establishing 504 a communications link 130 between the display arrangement 120 and the communication device 111,
assessing 505 if a piece of information concerning the user's identified intentions pertains to a specific location within the environment or a specific resource or a specific person, and
displaying 506 on said display arrangement said first information and a second information, the second information comprising an identifier associated with the specific location, resource or person.

It is contemplated that there are numerous modifications of the embodiments described herein, which are still within the scope of the invention as defined by the appended claims. The display arrangement 120 may for instance also display other kinds of information retrieved from the communications device and/or from the memory of the display arrangement, such as the time of the meeting or time to the beginning of the meeting, distance from the present location to the meeting room, expected time to walk to the meeting room, etc.

## Claims

1. A method for providing personalised augmented information to a user, the method comprising:
displaying a first information on a display arrangement, the display arrangement being adapted to detect presence of a portable communication device, or vice versa, wherein the portable communication device is adapted to store or to have access to information concerning the user or the user's identified intentions;
establishing a communication link between the display arrangement and the portable communication device;
assessing, by the display arrangement and/or the portable communication device, if a piece of information concerning the user or the user's identified intentions pertains to a specific piece of the first information; and if said piece of information concerning the user or the user's identified intentions pertains to said specific piece of the first information, displaying on the display arrangement the first information and a second information, wherein the second information comprises an identifier associated with the user.

2. The method according to claim 1, wherein assessing if a piece of information concerning the user or the user's identified intentions pertains to a specific piece of the first information comprises assessing if a piece of information concerning the user's identified intentions pertains to a specific location within an environment or a specific resource or a specific person, and, if the piece of information concerning the user's identified intentions pertains to the specific location within the environment or the specific resource or the specific person, the portable communication device is adapted to send to said display arrangement the second information.

3. The method according to claim 1 or 2, for providing personalised augmented location information, wherein the first information represents an environment, or resources or portable communication devices associated with persons, in said environment, in which or close to which environment the display arrangement is located,
wherein the portable communication device is associated with the user,
wherein in the assessing it is assessed if a piece of information concerning the user's identified intentions pertains to a specific location within the environment or a specific resource or a specific person,
and, if a piece of information concerning the user's identified intentions pertains to the specific location within the environment or the specific resource or the specific person, display on said display arrangement said first information and the second information,
the second information comprising an identifier associated with the specific location, resource or person.

4. The method according to any one of claims 1-3, wherein the identifier associated with the user is being displayed in association with the displaying of the specific location, resource or person.

5. The method according to any one of claims 1-4, wherein the display arrangement has a communications beacon broadcasting its identifier.

6. The method according to claim 5, wherein the beacon is a Bluetooth beacon, preferably a Bluetooth low energy beacon.

7. The method according to any one of claims 2-6, wherein the display arrangement is adapted to display a routing from a present location of the display arrangement or the communication device to the specific location, resource or person.

8. The method according to any one of claims 1-7, further comprising detecting when the communication device has been removed from the display arrangement a predetermined distance and in response thereto terminating the displaying of the second information.

9. A portable communication device for providing personalised augmented information to a user, the portable communication device being adapted to:
store or have access to information concerning the user or the user's identified intentions;
detect presence of a display arrangement displaying a first information;
establish a communication link with the display arrangement; and
assess if a piece of information concerning the user or the user's identified intentions pertains to a specific piece of the first information;
and, if said piece of information concerning the user or the user's identified intentions pertains to said specific piece of the first information, send to said display arrangement a second information comprising an identifier associated with the user.

10. The portable communication device according to claim 9, wherein the assessing comprises assessing if a piece of information concerning the user's identified intentions pertains to a specific location within an environment or a specific resource or a specific person, and, if a piece of information concerning the user's identified intentions pertains to the specific location within the environment or the specific resource or the specific person, send to said display arrangement the second information,
wherein the second information comprises an identifier associated with the specific location, resource or person.

11. A display arrangement for providing personalised augmented information to a user, the display arrangement being adapted to:
display a first information;
detect presence of a portable communication device, wherein the portable communication device is adapted to store or to have access to information concerning the user or the user's identified intentions;
establish a communication link with the portable communication device;
assess if a piece of information concerning the user or the user's identified intentions pertains to a specific piece of the first information; and
if a piece of information concerning the user or the user's identified intentions pertains to the specific piece of the first information, display the first information and a second information, wherein the second information comprises an identifier associated with the user.

12. The display arrangement according to claim 11, wherein the first information represents an environment, or resources or portable communication devices associated with persons, in said environment, in which or close to which environment the display arrangement is located;
wherein the assessing comprises assessing if a piece of information concerning the user's identified intentions pertains to a specific location within the environment or a specific resource or a specific person;
wherein, if a piece of information concerning the user's identified intentions pertains to the specific location within the environment or the specific resource or the specific person, the display arrangement is adapted to receive from the portable communication device a further piece of the second information comprising an identifier associated with the specific location, resource or person and displaying it in association with the displaying of the user.

13. The display arrangement according to claim 11 or 12, wherein the display arrangement has a communications beacon broadcasting its identifier, preferably a Bluetooth beacon, more preferably a Bluetooth low energy beacon.

14. A system for providing personalised augmented information to a user, the system comprising a portable communication device according to any one of claims 9-1 0 and a display arrangement according to anyone of claims 11-13.

15. A method, performed by a portable communication device, for providing personalised augmented information to a user, the method comprising:
storing or having access to information concerning the user or the user's identified intentions;
detecting presence of a display arrangement displaying a first information;
establishing a communication link with the display arrangement; and assessing if a piece of information concerning the user or the user's identified intentions pertains to a specific piece of the first information;
and, if said piece of information concerning the user or the user's identified intentions pertains to said specific piece of the first information, send to said display arrangement a second information comprising an identifier associated with the user.

## Patentansprüche

1. Verfahren zum Bereitstellen personalisierter erweiterter Informationen an einen Benutzer, wobei das Verfahren umfasst:
Anzeigen erster Information auf einer Anzeigeanordnung, wobei die Anzeigeanordnung dazu ausgelegt ist, das Vorhandensein einer tragbaren Kommunikationsvorrichtung zu erkennen, oder umgekehrt, wobei die tragbare Kommunikationsvorrichtung dazu ausgelegt ist, den Benutzer oder ermittelte Absichten des Benutzers betreffende Informationen zu speichern oder über Zugang dazu zu verfügen;
Herstellen einer Kommunikationsverbindung zwischen der Anzeigeanordnung und der tragbaren Kommunikationsvorrichtung;
Feststellen, über die Anzeigeanordnung und/oder die tragbare Kommunikationsvorrichtung, ob sich eine den Benutzer oder ermittelte Absichten des Benutzers betreffende Information auf eine bestimmte der ersten Informationen bezieht; und, wenn sich die den Benutzer oder ermittelte Absichten des Benutzers betreffende Information auf die bestimmte der ersten Informationen bezieht, Anzeigen der ersten Informationen und zweiter Informationen auf der Anzeigeanordnung, wobei die zweiten Informationen eine dem Benutzer zugeordnete Kennung umfassen.

2. Verfahren nach Anspruch 1, wobei das Feststellen, ob sich eine den Benutzer oder ermittelte Absichten des Benutzers betreffende Information auf eine bestimmte der ersten Informationen bezieht, Feststellen, ob sich eine ermittelte Absichten des Benutzers betreffende Information auf einen bestimmten Standort innerhalb einer Umgebung oder eine bestimmte Ressource oder eine bestimmte Person bezieht, und, wenn sich die ermittelte Absichten des Benutzers betreffende Information auf einen bestimmten Standort innerhalb der Umgebung oder die bestimmte Ressource oder die bestimmte Person bezieht, die tragbare Kommunikationsvorrichtung dazu ausgelegt ist, die zweiten Informationen an die Anzeigeanordnung zu senden.

3. Verfahren nach Anspruch 1 oder 2 zum Bereitstellen personalisierter erweiterter Standortinformationen, wobei die ersten Informationen eine Umgebung oder Ressourcen oder tragbare Kommunikationsvorrichtungen, die Personen in der Umgebung zugeordnet sind, wiedergeben, wobei sich die Anzeigeanordnung in der Umgebung oder in deren Nähe befindet,
wobei die tragbare Kommunikationsvorrichtung dem Benutzer zugeordnet ist,
wobei bei dem Feststellen festgestellt wird, ob sich eine ermittelte Absichten des Benutzers betreffende Information auf einen bestimmten Standort innerhalb der Umgebung oder eine bestimmte Ressource oder eine bestimmte Person bezieht, und, wenn sich eine ermittelte Absichten des Benutzers betreffende Information auf den bestimmten Standort innerhalb der Umgebung oder die bestimmte Ressource oder die bestimmte Person bezieht, Anzeigen der ersten Informationen und der zweiten Informationen auf der Anzeigeanordnung,
wobei die zweiten Informationen eine Kennung umfassen, die dem bestimmten Standort, der bestimmten Ressource oder der bestimmten Person zugeordnet ist.

4. Verfahren nach einem der Ansprüche 1-3, wobei die dem Benutzer zugeordnete Kennung in Verbindung mit dem Anzeigen des bestimmten Standorts, der bestimmten Ressource oder der bestimmten Person angezeigt wird.

5. Verfahren nach einem der Ansprüche 1-4, wobei die Anzeigeanordnung eine Kommunikationsbake dazu veranlasst, ihre Kennung auszusenden.

6. Verfahren nach Anspruch 5, wobei es sich bei der Bake um eine Bluetooth-Bake, bevorzugt eine Bluetooth-Low-Energy-Bake, handelt.

7. Verfahren nach einem der Ansprüche 2-6, wobei die Anzeigenordnung dazu ausgelegt ist, eine Route von einem aktuellen Standort der Anzeigeanordnung oder der Kommunikationsvorrichtung zu dem bestimmten Standort, der bestimmten Ressource oder der bestimmten Person anzuzeigen.

8. Verfahren nach einem der Ansprüche 1-7, ferner umfassend Erkennen, wenn die Kommunikationsvorrichtung von der Anzeigeanordnung um eine vorgegebene Entfernung entfernt wurde, und in Reaktion darauf Beenden des Anzeigens der zweiten Informationen.

9. Tragbare Kommunikationsvorrichtung zum Bereitstellen personalisierter erweiterter Informationen an einen Benutzer, wobei die tragbare Kommunikationsvorrichtung ausgelegt ist zum:
Speichern von oder Verfügen über einen Zugang zu den Benutzer oder ermittelte Absichten des Benutzers betreffenden Informationen;
Erkennen des Vorhandenseins einer erste Informationen anzeigenden Anzeigeanordnung;
Herstellen einer Kommunikationsverbindung mit der Anzeigeanordnung; und
Feststellen, ob sich eine den Benutzer oder ermittelte Absichten des Benutzers betreffende Information auf eine bestimmte der ersten Informationen bezieht;
und, wenn sich die den Benutzer oder ermittelte Absichten des Benutzers betreffende Information auf die bestimmte der ersten Informationen bezieht, Senden zweiter Informationen, die eine dem Benutzer zugeordnete Kennung umfassen, an die Anzeigeanordnung.

10. Tragbare Kommunikationsvorrichtung nach Anspruch 9, wobei das Feststellen Feststellen, ob sich eine den Benutzer oder ermittelte Absichten des Benutzers betreffende Information auf einen bestimmten Standort innerhalb einer Umgebung oder eine bestimmte Ressource oder eine bestimmte Person bezieht, und, wenn sich eine ermittelte Absichten des Benutzers betreffende Information auf den bestimmten Standort innerhalb der Umgebung oder die bestimmte Ressource oder die bestimmte Person bezieht, Senden der zweiten Informationen an die Anzeigeanordnung, wobei die zweiten Informationen eine dem bestimmten Standort, der bestimmten Ressource oder der bestimmten Person zugeordnete Kennung umfassen.

11. Anzeigeanordnung zum Bereitstellen personalisierter erweiterter Informationen an einen Benutzer, wobei die Anzeigeanordnung ausgelegt ist zum:
Anzeigen erster Informationen;
Erkennen des Vorhandenseins einer tragbaren Kommunikationsvorrichtung, wobei die tragbare Kommunikationsvorrichtung dazu ausgelegt ist, den Benutzer oder ermittelte Absichten des Benutzers betreffende Informationen zu speichern oder über Zugang dazu zu verfügen;
Herstellen einer Kommunikationsverbindung mit der tragbaren Kommunikationsvorrichtung;
Feststellen, ob sich eine den Benutzer oder ermittelte Absichten des Benutzers betreffende Information auf eine bestimmte der ersten Informationen bezieht; und
wenn sich eine den Benutzer oder ermittelte Absichten des Benutzers betreffende Information auf die bestimmte der ersten Informationen bezieht, Anzeigen der ersten Informationen und zweiter Information auf der Anzeigeanordnung, wobei die zweiten Informationen eine dem Benutzer zugeordnete Kennung umfassen.

12. Anzeigeanordnung nach Anspruch 11, wobei die ersten Informationen eine Umgebung oder Ressourcen oder tragbare Kommunikationsvorrichtungen, die Personen in der Umgebung zugeordnet sind, wiedergeben, wobei sich die Anzeigeanordnung in der Umgebung oder in deren Nähe befindet,
wobei das Feststellen Feststellen, ob sich eine ermittelte Absichten des Benutzers betreffende Information auf einen bestimmten Standort innerhalb der Umgebung oder eine bestimmte Ressource oder eine bestimmte Person bezieht;
wobei, wenn sich eine ermittelte Absichten des Benutzers betreffende Information auf den bestimmten Standort innerhalb der Umgebung oder die bestimmte Ressource oder die bestimmte Person bezieht, die Anzeigeanordnung dazu ausgelegt ist, von der tragbaren Kommunikationsvorrichtung eine weitere der zweiten Informationen zu empfangen, die eine dem bestimmten Standort, der bestimmten Ressource oder der bestimmten Person zugeordnete Kennung umfasst, und sie in Verbindung mit dem Anzeigen des Benutzers anzuzeigen.

13. Anzeigeanordnung nach Anspruch 11 oder 12, wobei die Anzeigeanordnung eine Kommunikationsbake dazu veranlasst, ihre Kennung auszusenden, bevorzugt eine Bluetooth-Bake, noch bevorzugter eine Bluetooth-Low-Energy-Bake.

14. System zum Bereitstellen personalisierter erweiterter Informationen an einen Benutzer, wobei das System eine tragbare Kommunikationsvorrichtung nach einem der Ansprüche 9-10 und eine Anzeigeanordnung nach einem der Ansprüche 11-13 umfasst.

15. Verfahren, das von einer tragbaren Kommunikationsvorrichtung durchgeführt wird, zum Bereitstellen personalisierter erweiterter Informationen an einen Benutzer, wobei das Verfahren umfasst:
Speichern von oder Verfügen über einen Zugang zu den Benutzer oder ermittelte Absichten des Benutzers betreffenden Informationen;
Erkennen des Vorhandenseins einer erste Informationen anzeigenden Anzeigeanordnung;
Herstellen einer Kommunikationsverbindung mit der Anzeigeanordnung; und Feststellen, ob sich eine den Benutzer oder ermittelte Absichten des Benutzers betreffende Information auf eine bestimmte der ersten Informationen bezieht;
und, wenn sich die den Benutzer oder ermittelte Absichten des Benutzers betreffende Information auf die bestimmte der ersten Informationen bezieht, Senden zweiter Information, die eine dem Benutzer zugeordnete Kennung umfassen, an die Anzeigeanordnung.

## Revendications

1. Procédé pour fournir des informations augmentées personnalisées à un utilisateur, le procédé comprenant :
l'affichage d'une première information sur un agencement d'affichage, l'agencement d'affichage étant adapté pour détecter une présence d'un dispositif de communication portable, ou vice versa, dans lequel le dispositif de communication portable est adapté pour stocker, ou avoir accès à, des informations concernant l'utilisateur ou des intentions identifiées de l'utilisateur ;
l'établissement d'une liaison de communication entre l'agencement d'affichage et le dispositif de communication portable ;
le fait d'estimer, par l'agencement d'affichage et/ou le dispositif de communication portable, si un élément d'informations concernant l'utilisateur ou des intentions identifiées de l'utilisateur se rapporte à un élément spécifique de la première information ; et si ledit élément d'informations concernant l'utilisateur ou des intentions identifiées de l'utilisateur se rapporte audit élément spécifique de la première information, l'affichage sur l'agencement d'affichage de la première information et d'une seconde information, dans lequel la seconde information comprend un identifiant associé à l'utilisateur.

2. Procédé selon la revendication 1, dans lequel le fait d'estimer si un élément d'informations concernant l'utilisateur ou des intentions identifiées de l'utilisateur se rapporte à un élément spécifique de la première information comprend le fait d'estimer si un élément d'informations concernant des intentions identifiées de l'utilisateur se rapporte à un emplacement spécifique à l'intérieur d'un environnement ou à une ressource spécifique ou à une personne spécifique, et, si l'élément d'informations concernant des intentions identifiées de l'utilisateur se rapporte à l'emplacement spécifique à l'intérieur de l'environnement ou à la ressource spécifique ou à la personne spécifique, le dispositif de communication portable est adapté pour envoyer audit agencement d'affichage la seconde information.

3. Procédé selon la revendication 1 ou 2, pour fournir des informations d'emplacement augmentées personnalisées, dans lequel la première information représente un environnement ou des ressources ou des dispositifs de communication portables associés à des personnes, dans ledit environnement dans lequel ou à proximité duquel l'agencement d'affichage est situé,
dans lequel le dispositif de communication portable est associé à l'utilisateur,
dans lequel dans l'estimation il est estimé si un élément d'informations concernant des intentions identifiées de l'utilisateur se rapporte à un emplacement spécifique à l'intérieur de l'environnement ou à une ressource spécifique ou à une personne spécifique,
et, si un élément d'informations concernant des intentions identifiées de l'utilisateur se rapporte à l'emplacement spécifique à l'intérieur de l'environnement ou à la ressource spécifique ou à la personne spécifique, l'affichage sur ledit agencement d'affichage de ladite première information et de la seconde information,
la seconde information comprenant un identifiant associé à l'emplacement spécifique, à la ressource spécifique ou à la personne spécifique.

4. Procédé selon l'une quelconque des revendications 1 à 3, dans lequel l'identifiant associé à l'utilisateur est affiché en association à l'affichage de l'emplacement spécifique, de la ressource spécifique ou de la personne spécifique.

5. Procédé selon l'une quelconque des revendications 1 à 4, dans lequel l'agencement d'affichage a une balise de communications diffusant son identifiant.

6. Procédé selon la revendication 5, dans lequel la balise est une balise Bluetooth, de préférence une balise Bluetooth à basse consommation.

7. Procédé selon l'une quelconque des revendications 2 à 6, dans lequel l'agencement d'affichage est adapté pour afficher un routage depuis un emplacement présent de l'agencement d'affichage ou du dispositif de communication vers l'emplacement spécifique, la ressource spécifique ou la personne spécifique.

8. Procédé selon l'une quelconque des revendications 1 à 7, comprenant en outre la détection lorsque le dispositif de communication a été déplacé de l'agencement d'affichage d'une distance prédéterminée et, en réponse à cela, l'arrêt de l'affichage de la seconde information.

9. Dispositif de communication portable pour fournir des informations augmentées personnalisées à un utilisateur, le dispositif de communication portable étant adapté pour :
stocker, ou avoir accès à, des informations concernant l'utilisateur ou des intentions identifiées de l'utilisateur ;
détecter une présence d'un agencement d'affichage affichant une première information ;
établir une liaison de communication avec l'agencement d'affichage ; et
estimer si un élément d'informations concernant l'utilisateur ou des intentions identifiées de l'utilisateur se rapporte à un élément spécifique de la première information ;
et, si ledit élément d'informations concernant l'utilisateur ou des intentions identifiées de l'utilisateur se rapporte audit élément spécifique de la première information, envoyer audit agencement d'affichage une seconde information comprenant un identifiant associé à l'utilisateur.

10. Dispositif de communication portable selon la revendication 9, dans lequel l'estimation comprend le fait d'estimer si un élément d'informations concernant des intentions identifiées de l'utilisateur se rapporte à un emplacement spécifique à l'intérieur d'un environnement ou à une ressource spécifique ou à une personne spécifique, et, si un élément d'informations concernant des intentions identifiées de l'utilisateur se rapporte à l'emplacement spécifique à l'intérieur de l'environnement ou à la ressource spécifique ou à la personne spécifique, envoyer audit agencement d'affichage la seconde information,
dans lequel la seconde information comprend un identifiant associé à l'emplacement spécifique, à la ressource spécifique ou à la personne spécifique.

11. Agencement d'affichage pour fournir des informations augmentées personnalisées à un utilisateur, l'agencement d'affichage étant adapté pour :
afficher une première information ;
détecter une présence d'un dispositif de communication portable, dans lequel le dispositif de communication portable est adapté pour stocker, ou pour avoir accès à, des informations concernant l'utilisateur ou des intentions identifiées de l'utilisateur ;
établir une liaison de communication avec le dispositif de communication portable ;
estimer si un élément d'informations concernant l'utilisateur ou des intentions identifiées de l'utilisateur se rapporte à un élément spécifique de la première information ; et
si un élément d'informations concernant l'utilisateur ou des intentions identifiées de l'utilisateur se rapporte à l'élément spécifique de la première information, afficher la première information et une seconde information, dans lequel la seconde information comprend un identifiant associé à l'utilisateur.

12. Agencement d'affichage selon la revendication 11, dans lequel la première information représente un environnement ou des ressources ou des dispositifs de communication portables associés à des personnes, dans ledit environnement, dans lequel ou à proximité duquel l'agencement d'affichage est situé ;
dans lequel l'estimation comprend le fait d'estimer si un élément d'informations concernant des intentions identifiées de l'utilisateur se rapporte à un emplacement spécifique à l'intérieur de l'environnement ou à une ressource spécifique ou à une personne spécifique ;
dans lequel, si un élément d'informations concernant des intentions identifiées de l'utilisateur se rapporte à l'emplacement spécifique à l'intérieur de l'environnement ou à la ressource spécifique ou à la personne spécifique, l'agencement d'affichage est adapté pour recevoir du dispositif de communication portable un autre élément de la seconde information comprenant un identifiant associé à l'emplacement spécifique, à la ressource spécifique ou à la personne spécifique et l'afficher en association à l'affichage de l'utilisateur.

13. Agencement d'affichage selon la revendication 11 ou 12, dans lequel l'agencement d'affichage a une balise de communications diffusant son identifiant, de préférence une balise Bluetooth, de manière davantage préférée une balise Bluetooth à faible consommation.

14. Système pour fournir des informations augmentées personnalisées à un utilisateur, le système comprenant un dispositif de communication portable selon l'une quelconque des revendications 9 à 10 et un agencement d'affichage selon l'une quelconque des revendications 11 à 13.

15. Procédé, réalisé par un dispositif de communication portable, pour fournir des informations augmentées personnalisées à un utilisateur, le procédé comprenant :
le stockage, ou l'accès à, des informations concernant l'utilisateur ou des intentions identifiées de l'utilisateur ;
la détection d'une présence d'un agencement d'affichage affichant une première information ;
l'établissement d'une liaison de communication avec l'agencement d'affichage ; et l'estimation si un élément d'informations concernant l'utilisateur ou des intentions identifiées de l'utilisateur se rapporte à un élément spécifique de la première information ;
et, si ledit élément d'informations concernant l'utilisateur ou des intentions identifiées de l'utilisateur se rapporte audit élément spécifique de la première information, envoyer audit agencement d'affichage une seconde information comprenant un identifiant associé à l'utilisateur.
